# EUROPÄISCHE PATENTANMELDUNG

(11) **EP 1 231 583 A1**
(43) Veröffentlichungstag der Anmeldung: **14.08.2002**
(21) Anmeldenummer: 01103077.2
(22) Anmeldetag: 09.02.2001
(51) Int. Cl.: G09B 29/04

(54) **Falzmuster**

(71) Anmelder: Huber, Franz, 80992 München (DE)
(72) Erfinder: Huber, Franz, 80992 München (DE)
(74) Vertreter: Kiessling, Christian

(57) **Zusammenfassung**

Bei einer Karte mit einem Muster von Falzlinien, entlang derer die Karte faltbar ist, wobei die Karte eine rechteckige Grundfläche mit zwei ersten parallelen Begrenzungslinien und zwei zweiten parallelen Begrenzungslinien aufweist, wird eine verbesserte Übersichtlichkeit und Auffindbarkeit vorherbestimmter Regionen dadurch erreicht, dass die Karte ausgehend von einer ersten der ersten parallelen Begrenzungslinien an sukzessiven Linien alternierend in jeweils entgegengesetzte Richtungen so gefaltet ist, dass eine Mehrzahl von Laschen gebildet ist, derart, dass die nahe einer zweiten der ersten parallelen Begrenzungslinien zu liegen kommenden Laschenkanten seitlich versetzt sind und die nahe der ersten der ersten parallelen Begrenzungslinien zu liegen kommenden Laschenkanten ebenfalls seitlich versetzt sind.

## Beschreibung

Die Erfindung betrifft Karte mit einem Muster von Falzlinien, entlang derer die Karte faltbar ist, wobei die Karte eine rechteckige Grundfläche mit zwei ersten parallelen Begrenzungslinien und zwei zweiten parallelen Begrenzungslinien aufweist.

Bei Karten der eingangs genannten Art dient ein Muster von Falzlinien dazu, die Karte auf ein möglichst handliches Format zusammenlegen zu können. Nachteilig ist dabei, dass es zum Auffinden eines bestimmten Punktes oder eines bestimmten Bereiches auf der Karte notwendig ist, die Karte insgesamt zu entfalten, um einen Überblick über das gesamte, von der Karte dargestellte Gebiet zu erhalten.

Aufgabe der Erfindung ist es, eine Karte zu schaffen, die übersichtlich ist und so zusammenfaltbar ist, das sowohl auf ihrer Vorderseite als auch auf ihrer Rückseite Zusatzinformationen so anbringbar sind, dass sie in direkter Nachbarschaft zu bestimmten vorgegebenen Regionen auf der Karte anbringbar sind.

Für eine Karte der eingangs genannten Art wird diese Aufgabe dadurch gelöst, dass die Karte ausgehend von einer ersten der ersten parallelen Begrenzungslinien an sukzessiven Linien alternierend in jeweils entgegengesetzte Richtungen so gefaltet ist, dass eine Mehrzahl von Laschen gebildet ist, derart, dass die nahe einer zweiten der ersten parallelen Begrenzungslinien zu liegen kommenden Laschenkanten seitlich versetzt sind und die nahe der ersten der ersten parallelen Begrenzungslinien zu liegen kommenden Laschenkanten ebenfalls seitlich versetzt sind.

Bevorzugte Ausgestaltungen der Erfindung sind Gegenstand der Unteransprüche.

Bei der erfindungsgemäßen Karte wird durch die Merkmalskombination, dass die Karte ausgehend von einer ersten der ersten parallelen Begrenzungslinien an sukzessiven Linien alternierend in jeweils entgegengesetzte Richtungen so gefaltet ist, dass eine Mehrzahl von Laschen gebildet ist, derart, dass die nahe einer zweiten der ersten parallelen Begrenzungslinien zu liegen kommenden Laschenkanten seitlich versetzt sind und die nahe der ersten der ersten parallelen Begrenzungslinien zu liegen kommenden Laschenkanten ebenfalls seitlich versetzt sind, erreicht, dass bestimmte Teilbereichte der Karte, die durch versetzte Laschenkanten gebildet sind, auch bei zusammengefalteter Karte für eine Einsichtnahme von außen direkt zugänglich sind.

Gemäß einer ersten bevorzugen Ausführungsform der erfindungsgemäßen Karte ist vorgesehen, dass die nahe einer zweiten der ersten parallelen Begrenzungslinien zu liegen kommenden Laschenkanten jeweils sukzessiv um einen konstanten Betrag, oder, gemäße einer alternativen Aasführungsform auch um einen nicht konstanten Betrag, seitlich versetzt sind und, die nahe der ersten der ersten parallelen Begrenzungslinien zu liegen kommenden Laschenkanten ebenfalls jeweils sukzessiv um einen konstanten Betrag, oder, gemäße der alternativen Aasführungsform auch um einen nicht konstanten Betrag, seitlich versetzt sind. Dadurch wird eine sehr einheitliche und übersichtliche Gesamtansicht der erfindungsgemäßen Karte erreicht.

Gemäß einer anderen bevorzugen Ausführungsform der erfindungsgemäßen Karte ist vorgesehen, dass nahe einer zweiten die durch die versetzten Laschenkanten gebildeten freiliegenden Kartenbereiche mit Zusatzinformationen versehen sind oder farblich gekennzeichnet sind. Dadurch ist eine schnelle Zuordnung von auch bei zusammengefalteter Karte direkt einsehbaren, Zusatzinformationen tragenden Bereichen zu in zusammengefaltetem Zustand der Karte nicht einsehbaren Bereichen herstellbar.

Gemäß einer weiteren bevorzugen Ausführungsform der erfindungsgemäßen Karte ist vorgesehen, dass nahe einer zweiten die beiden Grundflächen zweier Karten über einen mit einer Doppelfalzlinie (zwei parallele Falzlinien im Abstand von wenigen Millimetern voneinander) versehenen Steg miteinander verbunden sind, wobei der Steg an die jeweils zweiten Begrenzungslinien der Grundflächen angrenzt. Dadurch ist die Möglichkeit geschaffen, dass die erfindungsgemäße Karte beim Zusammenklappen eine vorteilhafte 'Buchform' mit einem Buchrücken im Bereich der Doppelfalzlinie einnimmt, wobei auf dem Buchrücken Informationen aufgedruckt werden können. Die Karte kann so wie ein Buch leicht auffindbar in einem Buchregal abgestellt werden. Der Titel der Karte kann dabei auf dem Buchrücken angeführt seinsein und ist dann auch in zusammengefaltetem Zustand der Karte erkennbar und braucht nicht wie üblich zusätzlich gesondert gedruckt zu werden.

Es versteht sich, dass die erfindungsgemäße Karte auch für die Darstellung nichtgeografischer Strukturen geeignet ist.

Die erfindungsgemäße Karte wird im folgenden anhand bevorzugter Ausführungsformen erläutert, die in den Figuren der Zeichnung dargestellt sind. Es zeigt:
- Fig. 1: eine Ausführungsform der erfindungsgemäßen Karte in einer Ansicht von schräg oben;
- Fig. 2: eine weitere Ausführungsform der erfindungsgemäßen Karte in Draufsicht;

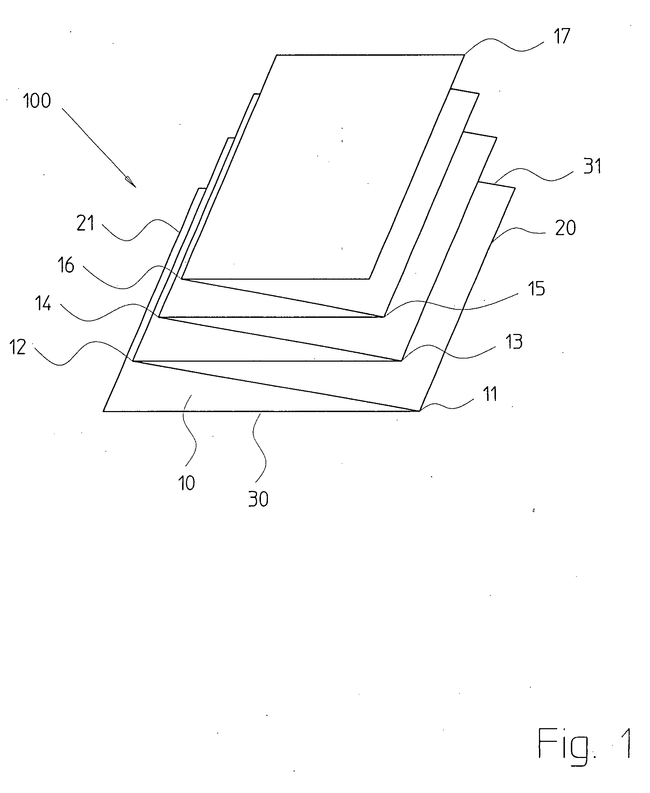

Die in Fig. 1 dargestellte erfindungsgemäße Karte 100 weist ein Muster von Falzlinien 11, 12, 13, 14, 15, 16 auf, entlang derer die Karte 100 faltbar ist, wobei die Karte 100 eine rechteckige Grundfläche 10 mit zwei ersten parallelen Begrenzungslinien 20, 21 und zwei zweiten parallelen Begrenzungslinien 30, 31 aufweist und die Karte 100 ausgehend von einer ersten 11 der ersten parallelen Begrenzungslinien 11, 13, 15 an sukzessiven Linien alternierend in jeweils entgegengesetzte Richtungen so gefaltet ist, dass eine Mehrzahl von Laschen gebildet ist, derart, dass die nahe einer zweiten 21 der ersten parallelen Begrenzungslinien zu liegen kommenden Laschenkanten 12, 14, 16 seitlich versetzt sind und die nahe der ersten 20 der ersten parallelen Begrenzungslinien zu liegen kommenden Laschenkanten 13, 15 ebenfalls seitlich versetzt sind. Die nahe einer zweiten 21 der ersten parallelen Begrenzungslinien 20, 21 zu liegen kommenden Laschenkanten 12, 14, 16 sind dabei jeweils sukzessiv um einen konstanten Betrag seitlich versetzt sind, und die nahe der ersten 20 der ersten parallelen Begrenzungslinien 20, 21 zu liegen kommenden Laschenkanten 13, 15, 17 sind dabei ebenfalls jeweils sukzessiv um einen konstanten Betrag seitlich versetzt.

Die durch die versetzten Laschenkanten gebildeten freiliegenden sind Kartenbereiche mit Zusatzinformationen versehen.

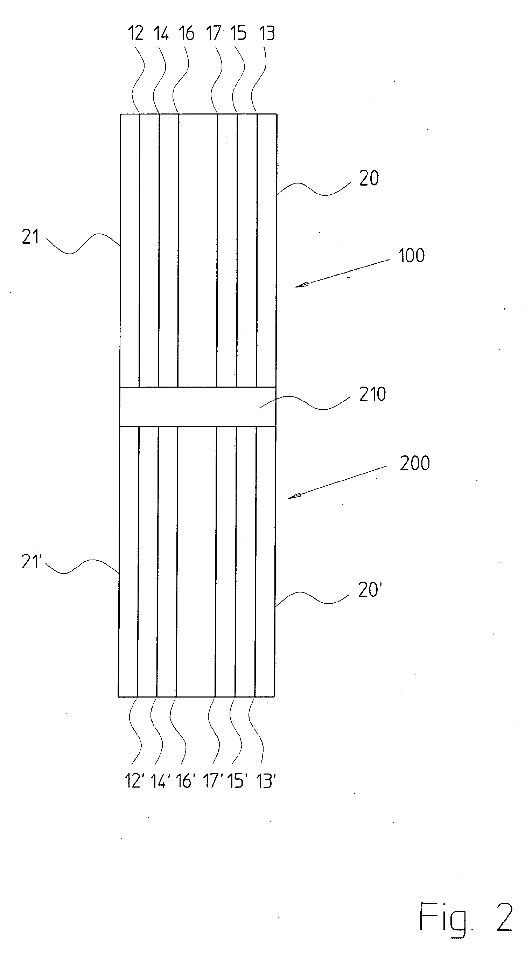

Bei der in Fig. 2 dargestellte erfindungsgemäße Karte 200 sind die beiden Grundflächen zweier Karten 100 über einen mit einer Doppelfalzlinie versehenen Steg 210 miteinander verbunden, wobei der Steg an die jeweils zweiten Begrenzungslinien der Grundflächen angrenzt.

Die oben erläuterten Ausführungsbeispiele der Erfindung dienen lediglich dem Zweck eines besseren Verständnisses der durch die Ansprüche vorgegebenen erfindungsgemäßen Lehre, die als solche durch die Ausführungsbeispiele nicht eingeschränkt ist.

## Patentansprüche

1. Karte (100) mit einem Muster von Falzlinien (11, 12, 13, 14, 15, 16,) entlang derer die Karte (100) faltbar ist, wobei die Karte eine rechteckige Grundfläche (10) mit zwei ersten parallelen Begrenzungslinien (20, 21) und zwei zweiten parallelen Begrenzungslinien (30, 31) aufweist, wobei die Karte ausgehend von einer ersten (20) der ersten parallelen Begrenzungslinien (20, 21) an sukzessiven Linien alternierend in jeweils entgegengesetzte Richtungen so gefaltet ist, dass eine Mehrzahl von Laschen gebildet ist, derart, dass die nahe einer zweiten (21) der ersten parallelen Begrenzungslinien (20, 21) zu liegen kommenden Laschenkanten (12, 14, 16) seitlich versetzt sind und die nahe der ersten (20) der ersten parallelen Begrenzungslinien zu liegen kommenden Laschenkanten (13, 15) ebenfalls seitlich versetzt sind, **dadurch gekennzeichnet, dass** die nahe einer zweiten der ersten parallelen Begrenzungslinien zu liegen kommenden Laschenkanten jeweils sukzessiv um einen konstanten Betrag seitlich versetzt sind, und die nahe der ersten der ersten parallelen Begrenzungslinien zu liegen kommenden Laschenkanten ebenfalls jeweils sukzessiv um einen konstanten Betrag seitlich versetzt sind.

2. Karte nach Anspruch 1, **dadurch gekennzeichnet, dass** die nahe einer zweiten der ersten parallelen Begrenzungslinien zu liegen kommenden Laschenkanten jeweils sukzessiv um einen konstanten Betrag seitlich versetzt sind, und die nahe der ersten der ersten parallelen Begrenzungslinien zu liegen kommenden Laschenkanten ebenfalls jeweils sukzessiv um einen konstanten Betrag seitlich versetzt sind.

3. Karte nach Anspruch 1, **dadurch gekennzeichnet, dass** die nahe einer zweiten der ersten parallelen Begrenzungslinien zu liegen kommenden Laschenkanten jeweils sukzessiv um einen nicht konstanten Betrag seitlich versetzt sind, und die nahe der ersten der ersten parallelen Begrenzungslinien zu liegen kommenden Laschenkanten ebenfalls jeweils sukzessiv um einen nicht konstanten Betrag seitlich versetzt sind.

4. Karte nach einem der vorhergehenden Ansprüche, **dadurch gekennzeichnet, dass** die durch die versetzten Laschenkanten gebildeten freiliegenden Kartenbereiche mit Zusatzinformationen versehen sind oder farblich gekennzeichnet sind.

5. Karte nach einem der vorhergehenden Ansprüche, **dadurch gekennzeichnet, dass** die beiden Grundflächen zweier Karten über einen mit einer Doppelfalzlinie versehenen Steg miteinander verbunden sind, wobei der Steg an die jeweils zweiten Begrenzungslinien der Grundflächen angrenzt.
